(19) Europäisches Patentamt
European Patent Office
Office européen des brevets

(11) **EP 4 246 375 A1**

(12) **EUROPEAN PATENT APPLICATION**
published in accordance with Art. 153(4) EPC

(43) Date of publication:
**20.09.2023 Bulletin 2023/38**

(21) Application number: **21905532.4**

(22) Date of filing: **02.12.2021**

(51) International Patent Classification (IPC):
***G06N 3/04*** *(2023.01)*       ***G06N 3/08*** *(2023.01)*

(52) Cooperative Patent Classification (CPC):
**G06F 30/27; G06N 3/04; G06N 3/08; G06N 3/12**

(86) International application number:
**PCT/CN2021/134926**

(87) International publication number:
**WO 2022/127603 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.12.2020 CN 202011465879**
**04.03.2021 CN 202110239644**

(71) Applicant: **Huawei Technologies Co., Ltd.
Shenzhen, Guangdong 518129 (CN)**

(72) Inventors:
• **YANG, Zheng**
**Shenzhen, Guangdong 518129 (CN)**
• **WANG, Kai**
**Shenzhen, Guangdong 518129 (CN)**

(74) Representative: **Maiwald GmbH
Engineering
Elisenhof
Elisenstrasse 3
80335 München (DE)**

(54) **MODEL PROCESSING METHOD AND RELATED DEVICE**

(57) This application discloses a model processing method and a related apparatus, belongs to the field of artificial intelligence, and is used for model optimization. The method includes: obtaining a first model; splitting the first model to obtain at least one first subgraph; performing an optimization operation on the at least one first subgraph based on a genetic algorithm, to obtain at least one optimized second subgraph; and obtaining a second model based on the at least one second subgraph. In this way, manual operations are reduced during optimization, and a need for users to master professional performance optimization skills is lowered.

FIG. 5

**Description**

**TECHNICAL FIELD**

Embodiments of this application relate to the field of artificial intelligence, and in particular, to a model processing method and a related apparatus.

**BACKGROUND**

Artificial intelligence (artificial intelligence, AI) is a theory, method, technology, and application system that simulates, extends, and expands human intelligence by using a digital computer or a machine controlled by the digital computer, to perceive the environment, acquire knowledge, and obtain an optimal result using the knowledge. In other words, artificial intelligence is a branch of computer science that seeks to understand essence of intelligence and produce a new intelligent machine that can react in a way similar to human intelligence. Artificial intelligence is to study design principles and implementation methods of various intelligent machines, so that the machines have functions of perception, reasoning, and decision-making.

Model performance optimization has always been in hot demand in the field of artificial intelligence. Results of model performance optimization represent a level of a company/organization in the field of artificial intelligence to some extent. In some time-sensitive AI application fields, model performance directly affects product competitiveness. Therefore, there is a more stringent requirement on high model performance.

Therefore, how to optimize model performance is an urgent problem to be resolved.

**SUMMARY**

Embodiments of this application provide a model processing method and a related apparatus. An optimization operation is performed on a subgraph based on a genetic algorithm, so that manual operations are reduced during optimization, and a need for users to master professional performance optimization skills is lowered.

According to a first aspect of embodiments of this application, a model processing method is provided. The method may be performed by a model processing apparatus, or may be performed by a component (such as a processor, a chip, or a chip system) of the model processing apparatus. The method includes: obtaining a first model; splitting the first model to obtain at least one first subgraph; performing an optimization operation on the at least one first subgraph based on a genetic algorithm, to obtain at least one optimized second subgraph, where the at least one first subgraph is in a one-to-one correspondence with the at least one second subgraph; and obtaining a second model based on the at least one second subgraph.

In this embodiment of this application, the first model is split to obtain the at least one first subgraph, the optimization operation is performed on the at least one first subgraph based on the genetic algorithm, to obtain the at least one optimized second subgraph, and the second model is obtained based on the at least one second subgraph. In this way, manual operations are reduced during optimization, and a need for users to master professional performance optimization skills is lowered.

Optionally, in a possible implementation of the first aspect, the step of performing the optimization operation on each first subgraph based on the genetic algorithm includes: step 1: adjusting the first subgraph by using a plurality of first policies, to obtain a plurality of third subgraphs; and step 2: selecting a second subgraph in the plurality of third subgraphs based on performance values of the plurality of third subgraphs.

In this possible implementation, the first subgraph is optimized by using the first policies to obtain the plurality of third subgraphs, and then the second subgraph in the plurality of third subgraphs is selected based on the performance values. The step 1 and step 2 may be considered as one iteration of the first subgraph. The first model is split into the plurality of first subgraphs, and then the plurality of first subgraphs are separately optimized, to obtain the optimized second subgraph. In this way, manual operations are reduced during optimization, and a need for users to master professional performance optimization skills is lowered.

Optionally, in a possible implementation of the first aspect, the step of performing the optimization operation on each first subgraph based on the genetic algorithm includes: step 1: adjusting the first subgraph by using a plurality of first policies, to obtain a plurality of third subgraphs; step 2: selecting a fourth subgraph in the plurality of third subgraphs based on performance values of the plurality of third subgraphs; step 3: adjusting the fourth subgraph by using a plurality of second policies, to obtain a plurality of fifth subgraphs; and step 4: selecting, from the plurality of fifth subgraphs, a subgraph whose performance value satisfies a preset condition as an optimized second subgraph.

In this possible implementation, the step 1 and step 2 may be considered as one iteration. In actual application, to achieve a better subgraph optimization effect, a plurality of iterations generally need to be performed, that is, the step 3 and step 4 are further included. In other words, the step 1 and step 2 may be considered as two iterations of the first subgraph. In this way, manual operations are reduced during optimization, and a need for users to master professional performance optimization skills is lowered.

Optionally, in a possible implementation of the first aspect, the foregoing step further includes: repeatedly performing the step 1 and the step 2 until a quantity of times of repetition is greater than or equal to a first preset threshold.

In this possible implementation, a subgraph obtained by repeatedly performing the step 1 and step 2 for a plurality of times until the quantity of times of repetition is greater than or equal to the first preset threshold may be used as the second subgraph. A plurality of iterations are performed on the first subgraph to obtain the more optimized second subgraph.

Optionally, in a possible implementation of the first aspect, the foregoing step further includes: repeatedly performing the step 1, the step 2, the step 3, and the step 4 until a quantity of times of repetition is greater than or equal to a first preset threshold.

In this possible implementation, a subgraph obtained by repeatedly performing the step 1 to step 4 for a plurality of times until the quantity of times of repetition is greater than or equal to the first preset threshold may be used as the second subgraph. A plurality of iterations are performed on the first subgraph to obtain the more optimized second subgraph.

Optionally, in a possible implementation of the first aspect, the step of selecting a fourth subgraph in the plurality of third subgraphs based on performance values of the plurality of third subgraphs includes: running the plurality of third subgraphs to obtain a plurality of performance values; and determining a subgraph whose performance value is greater than or equal to a second preset threshold in the plurality of third subgraphs as the fourth subgraph.

In this possible implementation, a subgraph obtained through each iteration is compiled and run on a board. Compared with simulation running in the conventional technology, in this application, a more accurate performance value of the subgraph can be obtained, and then a more optimized second subgraph can be determined.

Optionally, in a possible implementation of the first aspect, the first model in the foregoing step includes a first artificial intelligence AI operator and a second AI operator; and the splitting the first model to obtain at least one first subgraph includes: splitting the first AI operator by using the second AI operator as a splitting point, to obtain the at least one first subgraph. For example, the first AI operator is a calculation operator, and the second AI operator is a logical operator.

In this possible implementation, for the model that includes the first AI operator and the second AI operator, the calculation operator is optimized, so that efficiency of calculating some data by the second model can be improved.

Optionally, in a possible implementation of the first aspect, the step of obtaining a second model based on the at least one second subgraph includes: merging the at least one second subgraph to obtain the second model.

Optionally, in a possible implementation of the first aspect, the foregoing step further includes: recording a first workflow when the at least one first subgraph is obtained by splitting the first model; recording a second workflow when the at least one optimized second subgraph is obtained by performing the optimization operation on the at least one first subgraph based on the genetic algorithm; and recording a third workflow when the second model is obtained based on the at least one second subgraph.

In this possible implementation, discrete optimization is supported in a manner of recording a workflow. When the optimization is interrupted, a location before the interruption can be returned based on the workflow, so that optimization efficiency and optimization experience can be improved.

Optionally, in a possible implementation of the first aspect, the foregoing step further includes: reading a workflow, where the workflow includes at least one of the first workflow, the second workflow, or the third workflow; and restoring to a state that a subgraph has when the workflow is recorded, where the subgraph includes at least one of the first subgraph, the second subgraph, the third subgraph, the fourth subgraph, or the fifth subgraph.

In this possible implementation, discrete optimization is supported in a manner of recording a workflow and reading a workflow. In a restart after interruption, a location of last optimization can be returned based on the workflow to continue optimization. In this case, optimization duration is long. The support of discrete optimization can improve optimization efficiency and optimization experience.

Optionally, in a possible implementation of the first aspect, the foregoing step further includes: obtaining a first performance value of the first model and a second performance value of the second model.

In this possible implementation, performance is compared between the first model before optimization and the second model after optimization, to determine an optimization effect.

Optionally, in a possible implementation of the first aspect, the foregoing step further includes: outputting prompt information if a difference between the second performance value and the first performance value exceeds a third preset threshold, where the prompt information indicates that optimization of the first model succeeds.

In this possible implementation, when optimization performance is higher than the third preset threshold, the information indicating that the optimization succeeds is output, so that a user can accurately obtain an optimization result.

According to a second aspect of this application, a model processing apparatus is provided. The model processing apparatus includes: an obtaining unit, configured to obtain a first model; a splitting unit, configured to split the first model to obtain at least one first subgraph; and an optimization unit, configured to perform an optimization operation on the at least one first subgraph based on a genetic algorithm, to obtain at least one optimized second subgraph, where the at least one first subgraph is in a one-to-one correspondence with the at least one second subgraph. The obtaining unit is further configured to obtain a second model based on the at least one second subgraph.

Optionally, in a possible implementation of the second aspect, the optimization unit in the model processing apparatus includes: an adjustment subunit, configured to adjust the first subgraph by using a plurality of first policies, to obtain a plurality of third subgraphs; and a selection subunit, configured to select a second subgraph in the plurality of third subgraphs based on performance values of the plurality of third subgraphs.

Optionally, in a possible implementation of the second aspect, the optimization unit in the model processing apparatus includes: an adjustment subunit, configured to adjust the first subgraph by using a plurality of first policies, to obtain a plurality of third subgraphs; and a selection subunit, configured to select a fourth subgraph in the plurality of third subgraphs based on performance values of the plurality of third subgraphs. The adjustment subunit is further configured to adjust the fourth subgraph by using a plurality of second policies, to obtain a plurality of fifth subgraphs. The selection subunit is further configured to select, from the plurality of fifth subgraphs, a subgraph whose performance value satisfies a preset condition as an optimized second subgraph.

Optionally, in a possible implementation of the second aspect, in the model processing apparatus, the adjustment subunit repeatedly performs steps of adjustment, and the selection subunit repeatedly performs steps of selection, until a quantity of times of repetition is greater than or equal to a first preset threshold.

Optionally, in a possible implementation of the second aspect, in the model processing apparatus, the selection subunit is specifically configured to run the plurality of third subgraphs to obtain a plurality of performance values; and the selection subunit is specifically configured to determine a subgraph whose performance value is greater than or equal to a second preset threshold in the plurality of third subgraphs as the fourth subgraph.

Optionally, in a possible implementation of the second aspect, the first model includes a first artificial intelligence AI operator and a second AI operator; and the splitting unit is specifically configured to split the first AI operator by using the second AI operator as a splitting point, to obtain the at least one first subgraph.

Optionally, in a possible implementation of the second aspect, in the model processing apparatus, the obtaining unit is specifically configured to merge the at least one second subgraph to obtain the second model.

Optionally, in a possible implementation of the second aspect, the model processing apparatus further includes: a recording unit, configured to record a first workflow when the at least one first subgraph is obtained by splitting the first model. The recording unit is further configured to record a second workflow when the at least one optimized second subgraph is obtained by performing the optimization operation on the at least one first subgraph based on the genetic algorithm. The recording unit is further configured to record a third workflow when the second model is obtained based on the at least one second subgraph.

Optionally, in a possible implementation of the second aspect, the model processing apparatus further includes: a reading unit, configured to read a workflow, where the workflow includes at least one of the first workflow, the second workflow, or the third workflow; and restore to a state that a subgraph has when the workflow is recorded, where the subgraph includes at least one of the first subgraph, the second subgraph, the third subgraph, the fourth subgraph, or the fifth subgraph.

Optionally, in a possible implementation of the second aspect, in the model processing apparatus, the obtaining unit is further configured to obtain a first performance value of the first model and a second performance value of the second model.

Optionally, in a possible implementation of the second aspect, the model processing apparatus further includes: a prompting unit, configured to output prompt information if a difference between the second performance value and the first performance value exceeds a third preset threshold, where the prompt information indicates that optimization of the first model succeeds.

According to a third aspect of this application, a model processing apparatus is provided. The model processing apparatus performs the method in the first aspect or any possible implementation of the first aspect.

According to a fourth aspect of this application, a model processing apparatus is provided, including a processor. The processor is coupled to a memory. The memory is configured to store a program or instructions. When the program or the instructions are executed by the processor, the model processing apparatus is enabled to implement the method in the first aspect or any possible implementation of the first aspect.

According to a fifth aspect of this application, a computer-readable medium is provided. The computer-readable medium stores a computer program or instructions. When the computer program or the instructions are run on a computer, the computer is enabled to perform the method in the first aspect or any possible implementation of the first aspect.

According to a sixth aspect of this application, a computer program product is provided. The program product includes a program. When the program runs, the method in the first aspect or any possible implementation of the first aspect is performed.

For technical effects brought by the second aspect, the third aspect, the fourth aspect, the fifth aspect, the sixth aspect, or any possible implementation thereof, refer to technical effects brought by the first aspect or different possible implementations of the first aspect. Details are not described herein again.

It can be learned from the foregoing technical solutions that embodiments of this application have the following advantages: The first model is split to obtain the at least one first subgraph, the optimization operation is performed on the at least one first subgraph based on the genetic algorithm, to obtain the at least one optimized second subgraph, and the second model is obtained based on the at least one second subgraph. In this way, manual operations are reduced during optimization, and a need for users to master professional performance optimization skills is lowered.

**BRIEF DESCRIPTION OF THE DRAWINGS**

To describe embodiments of the present invention or the technical solutions in the conventional technology more clearly, the accompanying drawings to be used in the description of the embodiments or the conventional technology will be briefly described below. Clearly, the accompanying drawings in the following description are only some embodiments of the present invention, and a person of ordinary skill in the art may further obtain other drawings based on these accompanying drawings without creative efforts.

FIG. 1 is a schematic diagram of an artificial intelligence subject framework according to an embodiment of this application;
FIG. 2 is a schematic diagram of a process of fusion optimization of subgraphs of an existing model;
FIG. 3 shows a hardware structure of a chip according to an embodiment of this application;
FIG. 4 shows a system architecture according to an embodiment of this application;
FIG. 5 is a schematic flowchart of a model processing method according to an embodiment of this application;
FIG. 6 is a schematic structural diagram of an example of splitting a first model according to an embodiment of this application;
FIG. 7 to FIG. 10 are schematic diagrams of structures of several optimized first models according to an embodiment of this application;
FIG. 11 is another schematic flowchart of a model processing method according to an embodiment of this application;
FIG. 12 is a schematic diagram of a subgraph optimization process corresponding to FIG. 11; and
FIG. 13 to FIG. 15 are schematic diagrams of several structures of a model processing apparatus according to an embodiment of this application.

**DESCRIPTION OF EMBODIMENTS**

The following describes the technical solutions in embodiments of the present invention with reference to the accompanying drawings in embodiments of the present invention. It is clearly that the described embodiments are merely some rather than all of embodiments of the present invention. All other embodiments obtained by a person of ordinary skill in the art based on embodiments of the present invention without creative efforts shall fall within the protection scope of the present invention.

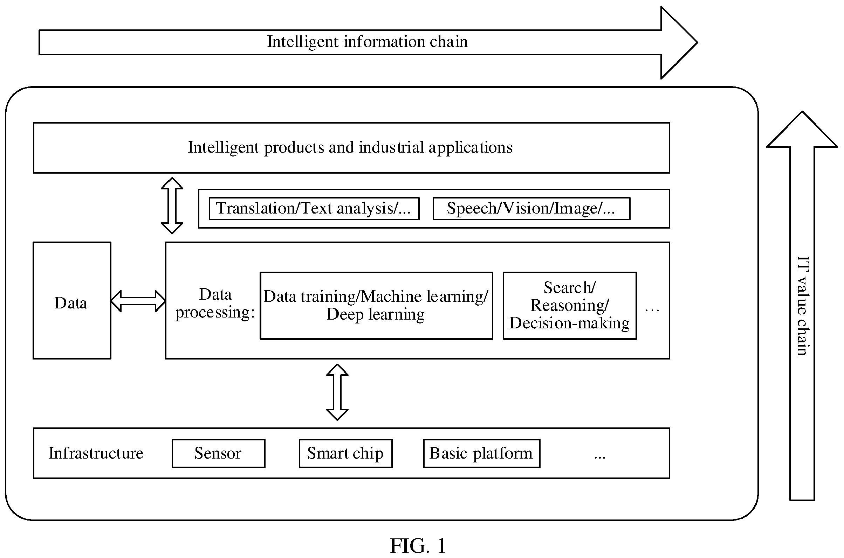

FIG. 1 is a schematic diagram of an artificial intelligence subject framework. The subject framework describes an overall working flow of an artificial intelligence system, and is applicable to a general requirement in the field of artificial intelligence.

The following describes the above artificial intelligence subject framework from two dimensions: "intelligent information chain" (horizontal axis) and "internet technology (internet technology, IT) value chain" (vertical axis).

The "intelligent information chain" reflects a series of processes from data acquisition to processing. For example, the "intelligent information chain" may be a general process of intelligent information perception, intelligent information representation and formation, intelligent reasoning, intelligent decision-making, and intelligent execution and output. In this process, data experiences a condensation process of "data-information-knowledge-intelligence".

The "IT value chain" reflects the value brought by artificial intelligence to the information technology industry from underlying infrastructure and information (implementation of providing and processing technology) of artificial intelligence to a systematic industry ecological process.

(1) Infrastructure:

The infrastructure provides computing power support for an artificial intelligence system, enables communication with the outside world, and implements support through a basic platform. The communication with the outside is implemented by using a sensor. The computing power is provided by a smart chip (a central processing unit (central processing unit, CPU), a neural network processing unit (neural network processing unit, NPU), a graphics processing unit (graphics processing unit, GPU), an application specific integrated circuit (application specific integrated circuit, ASIC), a field programmable gate array (field programmable gate array, FPGA), or another hardware acceleration chip). The basic platform includes related platform assurance and support such as a distributed computing framework and a network, and may include cloud storage and computing, and interconnection networks. For example, a sensor communicates with the outside to obtain data, and the data is provided to a smart chip in a distributed computing system provided by a basic platform for computing.

(2) Data:

The data on an upper layer of the infrastructure indicates a data source in the field of artificial intelligence. The data involves graphics, images, voice, and text, and further involves Internet of Things data of conventional devices, including service data of existing systems and perception data such as force, displacement, liquid level, temperature, and humidity.

(3) Data processing:

Data processing usually includes data training, machine learning, deep learning, search, reasoning, and decision-making.
Machine learning and deep learning can perform symbolic and formal intelligent information modeling, extraction, preprocessing, training, and the like on data.
Reasoning refers to a process of machine thinking and solving problems based on formal information according to a reasoning control policy through simulation of a human intelligent reasoning mode in a computer or intelligent system. The typical functions are search and match.
Decision-making refers to a process of making decisions on intelligent information obtained through reasoning. It usually provides functions such as classification, sorting, and prediction.

(4) General capability:

After the data processing described above is performed on data, some general capabilities can be further formed based on a result of the data processing, for example, an algorithm or a general system, including translation, text analysis, computer vision processing, speech recognition, image recognition, or the like.

(5) Intelligent products and industrial applications:

Intelligent products and industrial applications refer to products and applications of artificial intelligence systems in various fields, and are package of an overall solution of artificial intelligence. Decision making for intelligent information is productized and an application is implemented. The application fields mainly include intelligent manufacturing, intelligent transportation, smart home, smart healthcare, smart security, autonomous driving, safe city, smart terminals, and the like.
Because embodiments of this application involve application of a neural network, for ease of understanding, the following first describes terms and concepts related to a neural network mainly involved in embodiments of this application.

(1) Neural network:

The neural network may be formed by a neural unit. The neural unit may be an operation unit that uses $X_s$ and an intercept 1 as an input. An output of the operation unit may be:

$$h_{W,b}(x) = f(W^T x) = f\left(\sum\nolimits_{s=1}^{n} W_s x_s + b\right).$$

In this formula, s = 1, 2, ..., n, n is a natural number greater than 1, $W_s$ is a weight of $X_s$, and b is a bias of the neural unit. Herein, f is an activation function (activation function) of the neural unit, and is used to introduce a non-linear characteristic into the neural network, to convert an input signal in the neural unit into an output signal. The output signal of the activation function may be used as an input of a next convolutional layer. The activation function may be a sigmoid function. The neural network is a network formed by linking a plurality of single neural units together, that is, an output of one neural unit may be an input of another neural unit. An input of each neural unit may be connected to a local receptive field of a previous layer to extract a feature of the local receptive field. The local receptive field may be a field formed by several neural units.

(2) Deep neural network:

The deep neural network (deep neural network, DNN), also referred to as a multi-layer neural network, may be understood as a neural network with many hidden layers. There is no special measurement standard for "many" herein. Based on locations of different layers of the DNN, the neural network inside the DNN may be divided into three types: input layer, hidden layer, and output layer. Generally, a first layer is an input layer, a last layer is an output layer, and all layers in the middle are hidden layers. Layers are fully connected. That is, any neuron in an $i^{th}$ layer is inevitable to be connected to any neuron in an $(i+1)^{th}$ layer. Although the DNN seems complex, it is not complex for each layer to work. Simply speaking, each layer satisfies the following linear relationship expression: $\vec{y} = \alpha(W\vec{x} + \vec{b})$. $y = \alpha(W\vec{x} + \vec{b})$ is an input vector, $\vec{y} = \alpha(W\vec{x} + \vec{b})$ is an output vector, $\vec{y} = \alpha(W\vec{x} + \vec{b})$ is an offset vector, W is a weight matrix (also referred to as a coefficient), and $\alpha_{()}$ is an activation function. In each layer, an output vector is obtained from an input vector through such a simple operation. Because the DNN has many layers, quantities of the coefficients W and the offset vectors $\vec{y} = \alpha(W\vec{x} + \vec{b})$ are large. These parameters are defined in the DNN as follows: Using the coefficient W as an example, it is assumed that in a three-layer DNN, a linear coefficient from the fourth neuron of the second layer to the second neuron of the third layer is defined as $W_{24}{}^3$. The superscript 3 represents a layer at which the coefficient is located, and the subscript corresponds to the output index 2 of the third layer and the input index 4 of the second layer. To sum up, a coefficient from a $k^{th}$ neuron of an $(L-1)^{th}$ layer to a $j^{th}$ neuron of an $L^{th}$ layer is defined as $W_{jk}^{L}$. It is to be noted that there is no parameter W for the input layer. In the deep neural network, more hidden layers allow the network to better portray real-world complex situations. Theoretically, a model with more parameters is more complex, and has higher "capacity", which means that the model can complete more complex learning tasks. Training the deep neural network is a process of learning weight matrices, and has an ultimate goal to obtain weight matrices (weight matrices formed by the vector W of many layers) of all layers of the trained deep neural network.

(3) Convolutional neural network:

The convolutional neural network (convolutional neural network, CNN) is a deep neural network with a convolutional structure. The convolutional neural network includes a feature extractor composed of a convolutional layer and a sub-sampling layer. The feature extractor may be considered as a filter. A convolution process may be considered as convolution performed by using a trainable filter and an input image or convolutional feature plane (feature map). The convolutional layer is a neuron layer that performs convolution processing on an input signal in the convolutional neural network. In the convolutional layer of the convolutional neural network, a neuron may be connected to only some neurons in adjacent layers. A convolutional layer usually includes several feature planes, and each feature plane may be composed of some neural units arranged in a rectangular manner. Neural units in a same feature plane share a weight. The shared weight herein is a convolutional kernel. The shared weight may be understood as that a manner of extracting image information is location-independent. The implicit principle is that statistical information of one part of an image is the same as that of other parts. This means that image information learned in one part can also be used in another part. Therefore, the same learned image information can be used for all locations on the image. In a same convolutional layer, different image information may be extracted by using a plurality of convolutional kernels. Generally, a larger quantity of convolutional kernels indicates richer image information reflected by a convolution operation.

The convolutional kernel may be initialized in a form of a matrix of a random size. In a process of training the convolutional neural network, the convolutional kernel may obtain a proper weight through learning. In addition, a direct advantage brought by the shared weight is that connections between layers of the convolutional neural network are reduced and the risk of overfitting is reduced.

(4) Loss function:

In a process of training the deep neural network, as an output of the deep neural network is expected to be as close as possible to a value that is desired to be actually predicted, a weight vector of each layer of neural network may be updated based on a difference between the predicted value of the current network and the desired target value obtained through comparison (certainly, there is usually an initialization process before a first update, that is, parameters are pre-configured for each layer in the deep neural network). For example, if the predicted value of the network is high, the weight vector is adjusted to make the predicted value lower, until the deep neural network can predict the desired target value or a value that is very close to the desired target value. Therefore, "how to obtain a difference between a predicted value and a target value through comparison" needs to be defined in advance. This is a loss function (loss function) or an objective function (objective function), which is an important equation for measuring a difference between a predicted value and a target value. Using a loss function as an example, a higher output value (loss) of the loss function indicates a larger difference. Then, training the deep neural network becomes a process of reducing the loss as much as possible.

(5) Deep learning:

Deep learning (deep learning) is a type of machine learning technology based on a deep neural network algorithm. Its main feature is to process and analyze data by using multiple nonlinear transformation structures. The deep learning is mainly applied in scenarios such as perception and decision-making in the field of artificial intelligence, including image and speech recognition, natural language translation, computer games, and the like.

(6) Neural network processing unit:

The neural network processing unit (neural network processing unit, NPU) is a processor that performs a special optimization design for neural network computing. Compared with a conventional graphics processing unit (graphics processing unit, GPU), multiplication accumulation calculation is added. In a case that same computing power is provided, memory bandwidth is less and power consumption is lower.

(7) Pixel value:

A pixel value of an image may be a red-green-blue (RGB) color value. The pixel value may be a long integer representing the color. For example, a pixel value is 256*Red + 100*Green + 76*Blue. Blue represents a blue component, Green represents a green component, and Red represents a red component. In each color component, a smaller value indicates a lower brightness, and a larger value indicates a higher brightness. For a grayscale image, the pixel value may be a grayscale value.

(8) Genetic algorithm:

The genetic algorithm is a computational model of biological evolution, which simulates selection and elimination of genetics in nature. An object of the genetic algorithm is a population, that is, a set of many individuals. Corresponding to a problem to be solved, the individual represents a solution, and the population represents the set of these solutions. Certainly, at the beginning, all the solutions may be not optimal. These solutions are encoded, selected, crossed, and mutated to obtain an offspring through evolution generation by generation. The offspring inherits information of a previous generation and is better than the previous generation. In this way, a global optimal solution of the problem can be found from the offspring. In general, the genetic algorithm has no limit on a function to be optimized. It requires neither continuous function nor differentiable function. It may be an explicit function represented by a mathematical analytical formula, or may be an implicit function of a mapping matrix or even a neural network, so that the genetic algorithm has a wide range of application.

(9) Computational graph:

A core of a machine learning task is a definition of a machine learning model and a parameter solving manner of the machine learning model. After the definition and parameter solving manner are abstracted, a unique computational logic is determined, and a graph representing the computational logic is named a computational graph (which may also be referred to as a graph). The computational graph is a directed acyclic graph, which defines a flow direction and manner of data, a calculation manner of data, and a relationship between various calculations.

(10) Operator:

An operation (such as convolution, pooling, or full connection) in a deep neural network is referred to as an operator.

Model performance optimization has always been in hot demand in the field of artificial intelligence. Results of model performance optimization represent a level of a company/organization in the field of artificial intelligence to some extent. In some time-sensitive AI application fields, model performance directly affects product competitiveness. Therefore, there is a more stringent requirement on high model performance.

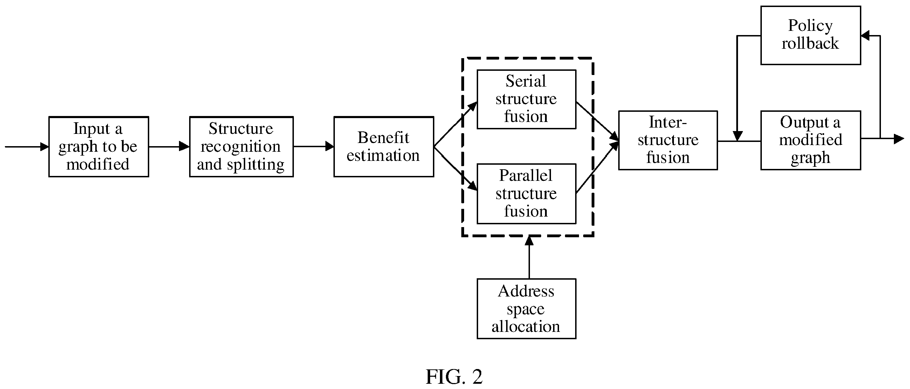

Currently, data reuse optimization is an important means of model-based collaborative optimization of software and hardware. For example, fusion optimization based on L1 buffer (Buffer), L2 buffer, and L2 cache (Cache) can maximize computing power of hardware and reduce data interaction and copy time, thereby greatly improving performance of the model. FIG. 2 is a schematic diagram of a process of fusion optimization of subgraphs of an existing model. A user modifies a graph based on experience. An optimizer estimates inside operator performance benefits under L1 and L2 data flows based on "optimal" split policies of various operators under a specific input shape. Then, considering hedging benefits such as fusion depth, overlap (overlap) calculation, split costs, and fusion benefits, a fusion-split policy that can obtain positive benefits is determined.

However, this processing manner has several difficulties from the perspective of implementation. First, the current NPU-based data reuse optimization has a high threshold for optimization personnel. The optimization personnel need to be familiar with NPU architecture details and BufferSize configuration in different product forms. During optimization, it is necessary to determine whether the fusion-split policy is correct based on related logs and experience. Second, for various network topology structures, implementation of a fusion policy in program is complex, time-consuming and labor-consuming, and difficult for engineering.

In view of the foregoing difficulties, this application provides a model processing method. An optimization operation is performed on a subgraph based on a genetic algorithm, so that manual operations are reduced during optimization, and a need for users to master professional performance optimization skills is lowered.

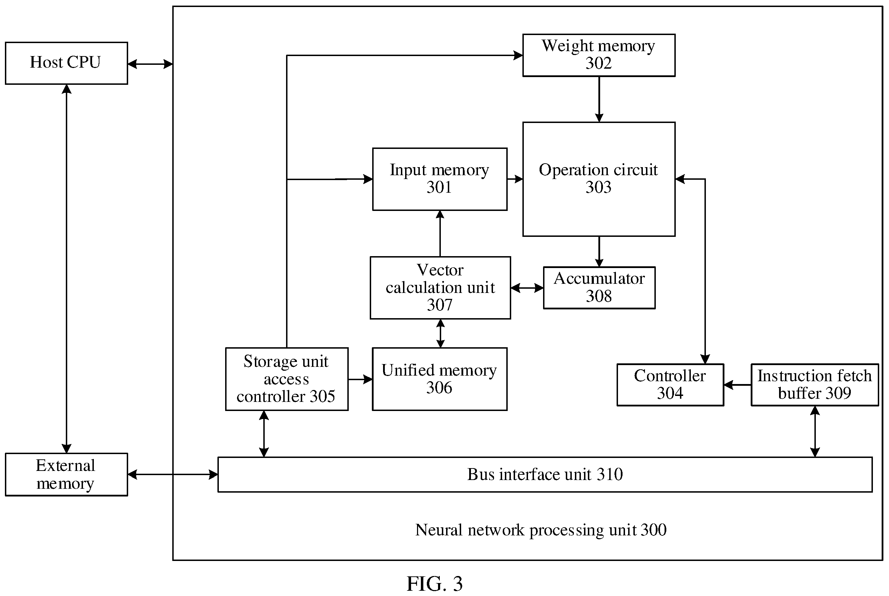

The following describes a hardware structure of a chip provided according to an embodiment of this application. Refer to FIG. 3. This embodiment of the present invention provides a hardware structure of a chip. The chip includes a neural network processing unit NPU 300. The neural network processing unit 300, as a coprocessor, is mounted on a host CPU (Host CPU), and the host CPU allocates a task. A core part of the NPU is an operation circuit 303. A controller 304 controls the operation circuit 303 to extract data from a memory (a weight memory or an input memory) and perform an operation.

In some implementations, the operation circuit 303 includes a plurality of processing units (process engines, PEs). In some implementations, the operation circuit 303 is a two-dimensional systolic array. The operation circuit 303 may alternatively be a one-dimensional systolic array or another electronic circuit capable of performing mathematical operations such as multiplication and addition. In some implementations, the operation circuit 303 is a general-purpose matrix processor.

For example, it is assumed that there is an input matrix A, a weight matrix B, and an output matrix C. The operation circuit obtains data corresponding to the matrix B from a weight memory 302, and caches the data on each PE in the operation circuit. The operation circuit obtains data of the matrix A from an input memory 301 and performs a matrix operation with the matrix B, to obtain a partial result or final result of the matrices, and stores the result in an accumulator 308.

A vector calculation unit 307 may further process an output of the operation circuit, such as vector multiplication, vector addition, exponential operation, logarithm operation, and size comparison. For example, the vector calculation unit 307 may be configured for network calculation of a non-convolutional/non-FC layer in a neural network, such as pooling (Pooling), batch normalization (Batch Normalization), and local response normalization (Local Response Normalization).

In some implementations, the vector calculation unit 307 stores a vector that is processed and output to a unified cache 306. For example, the vector calculation unit 307 may apply a non-linear function, for example, a vector of accumulated values, to an output of the operation circuit 303 to generate an activation value. In some implementations, the vector calculation unit 307 generates a normalized value, a merged value, or both. In some implementations, a vector that is processed and output can be used as an activation input to the operation circuit 303, for example, for use in subsequent layers in a neural network.

The unified memory 306 is configured to store input data and output data.

Weight data is obtained from a storage unit access controller (direct memory access controller, DMAC) 305. Input data in an external memory is transferred to the input memory 301 and/or the unified memory 306, weight data in the external memory is stored in the weight memory 302, and data in the unified memory 306 is stored in the external memory.

A bus interface unit (bus interface unit, BIU) 310 is configured to implement interaction among the host CPU, the DMAC, and an instruction fetch buffer 309 by using a bus.

The instruction fetch buffer (instruction fetch buffer) 209 connected to the controller 304 is configured to store instructions used by the controller 304.

The controller 304 is configured to call the instructions cached in the instruction fetch buffer 309, to control a working process of an operation accelerator.

Generally, the unified memory 306, the input memory 301, the weight memory 302, and the instruction fetch buffer 309 are all on-chip (On-Chip) memories, the external memory is a memory outside the NPU, and the external memory may be a double data rate synchronous dynamic random access memory (double data rate synchronous dynamic random access memory, DDR SDRAM for short), a high bandwidth memory (high bandwidth memory, HBM), or another readable and writable memory.

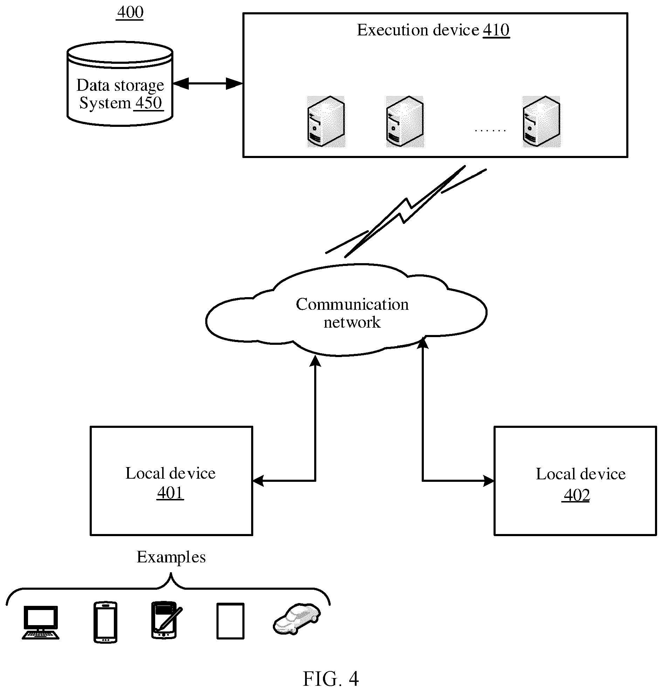

Refer to FIG. 4. An embodiment of the present invention provides a system architecture 400. An execution device 410 is implemented by one or more servers. Optionally, the execution device 410 cooperates with another computing device, such as a data storage device, a router, or a load balancer. The execution device 410 may be arranged on one physical site, or distributed on a plurality of physical sites. The execution device 410 may use data in a data storage system 450, or call program code in the data storage system 450 to implement model optimization.

Users may operate respective user equipment (such as a local device 401 and a local device 402) to interact with the execution device 410. Each local device may represent any computing device, such as a personal computer, a computer workstation, a smartphone, a tablet computer, a smart camera, a smart vehicle or another type of cellular phone, a media consumption device, a wearable device, a set-top box, or a game console.

A local device of each user may interact with the execution device 410 through a communication network of any communication mechanism/communication standard. The communication network may be a wide area network, a local area network, a point-to-point connection, or any combination thereof.

In another implementation, one or more aspects of the execution device 410 may be implemented by each local device. For example, the local device 401 may provide local data or feed back a calculation result to the execution device 410.

It is to be noted that all functions of the execution device 410 may also be implemented by a local device. For example, the local device 401 implements a function of the execution device 410 and provides a service for a user of the local device 401, or provides a service for a user of the local device 402.

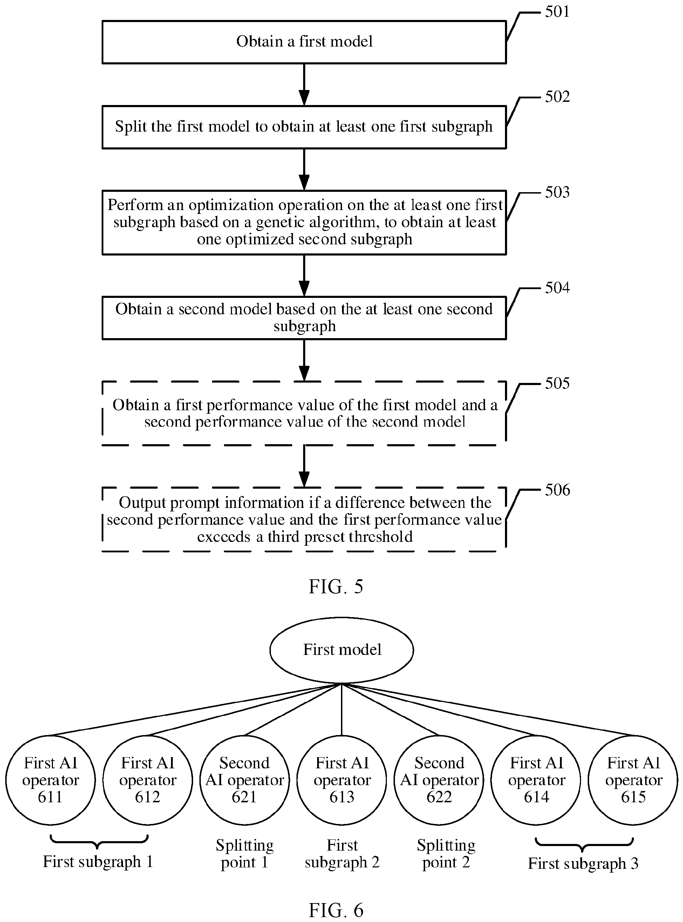

Refer to FIG. 5. An embodiment of the model processing method provided in embodiments of this application includes a step 501 to a step 506. The model processing method may be performed by a model processing apparatus (which may also be referred to as an optimization apparatus), or may be performed by a component of the model processing apparatus (such as a processor, a chip, or a chip system). This is not specifically limited herein.

The model processing method provided in embodiments of this application may be applied to a case in which performance of a neural network model on NPU hardware does not satisfy a standard. A user uses a to-be-optimized model as an input of an automatic optimization apparatus. After other conditions (for example, a quantity of iterations or performance satisfies a preset condition) are set, automatic optimization is enabled. User intervention is reduced during the entire optimization. After the optimization is finished, an optimized model whose performance is not lower than that of the original neural network model is provided to the user, with unchanged model precision.

In the step 501, a first model is obtained.

The first model in this embodiment of this application is a to-be-optimized neural network model. The first model may be input by a user, or may be sent by another device. This is not specifically limited herein.

Optionally, the first model includes a first AI operator and a second AI operator. The first AI operator is mainly responsible for executing a matrix, vector, and scalar computation-intensive operator task, and may use the Da Vinci architecture. The second AI operator is mainly responsible for executing an operator task that is not suitable for execution by the first AI operator, such as a logical operation (responsible for complex non-matrix computation).

It may also be understood that the first AI operator is mainly used for vector and matrix operations, and the second AI operator is mainly used for logical operations. For example, the first AI operator is an AI core operator, and is used as a computing core of an AI chip. The second AI operator is an AI CPU operator.

In the step 502, the first model is split to obtain at least one first subgraph.

The first model in this embodiment of this application is a neural network model, and may be specifically a deep neural network model, or may be a convolutional neural network model. This is not specifically limited herein. Each neural network model may be considered as a computational graph. The computational graph may be split into one or more computational subgraphs (or referred to as subgraphs). The subgraph includes one or more first AI operators and one or more second AI operators.

Optionally, the first model has a large quantity of calculation (vectors, matrices, and the like) operators and control operators, and the calculation operators may be split based on the control operators to obtain at least one first subgraph.

Optionally, if the first model includes the first AI operator and the second AI operator, the first AI operator is split by using the second AI operator as a splitting point, to obtain at least one first subgraph. For example, the AI core operator is split by using the AI CPU operator as a splitting point.

For example, refer to FIG. 6. The first model includes five first AI operators 611 to 615 and two second AI operators (which may also be understood as splitting points) 621 and 622, and the first model is split into three first subgraphs (respectively a first subgraph 1, a first subgraph 2, and a first subgraph 3). It may be understood that in FIG. 6, a quantity of the first AI operators, a quantity of the second AI operators, a quantity of the first AI operators included in the first subgraph, and a quantity of the first subgraphs may be larger or smaller. Specific quantities are not limited herein.

Optionally, a first workflow is recorded when the at least one first subgraph is obtained by splitting the first model. A rollback mechanism is provided to avoid recalculation caused by device abnormality.

In embodiments of this application, quantities of the first subgraphs, the first AI operators, and the second AI operators are not limited.

In the step 503, an optimization operation is performed on the at least one first subgraph based on a genetic algorithm, to obtain at least one optimized second subgraph.

In this embodiment of this application, the at least one first subgraph is in a one-to-one correspondence with the at least one second subgraph. It may also be understood that a quantity of the first subgraphs is the same as a quantity of the second subgraphs.

It may be understood that some optimized second subgraphs may be the same as the corresponding first subgraphs. That is, new subgraphs may not be obtained after the optimization operation is performed on some first subgraphs (in other words, some first subgraphs are ideal subgraphs).

In this embodiment of this application, the optimization operation may be performed on some or all of the first subgraphs obtained by splitting the first model. This is not specifically limited herein.

The step 503 may include a plurality of steps. The following uses an optimization operation on a first subgraph as an example for description.

Step 1: Adjust the first subgraph by using a plurality of first policies, to obtain a plurality of third subgraphs.

The policy in this embodiment of this application is a specific embodiment of a graph modification method. The graph modification may be understood as setting an attribute of a node based on a policy (a quantity of node slicing, a data flow, or the like). The attribute of the node includes an input and an output.

In embodiments of this application, the adjustment to the first subgraph by using the plurality of first policies may be encoding, crossing, mutation, or the like. This is not specifically limited herein.

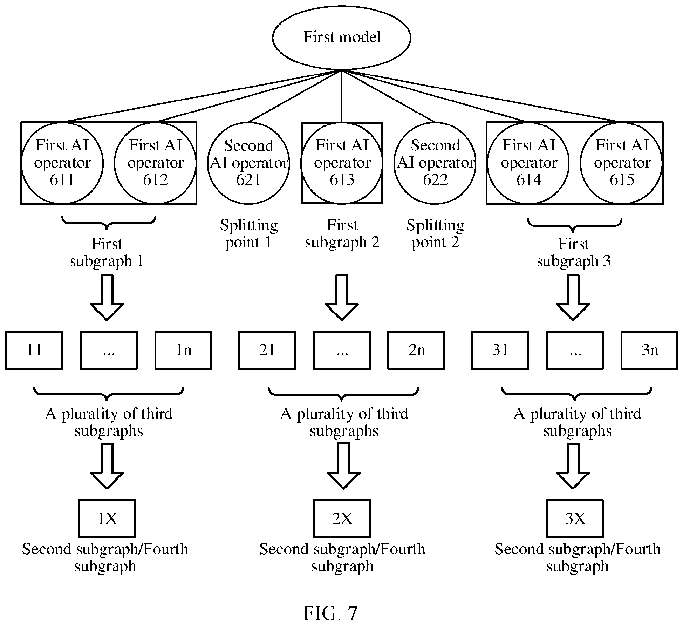

For example, the example of the first subgraph in FIG. 6 is continued. Refer to FIG. 7. For the first subgraph 1, the first subgraph 1 is adjusted by using n first policies, to obtain n third subgraphs (including numbers 11 to 1n). For the first subgraph 2, the first subgraph 2 is adjusted by using n first policies, to obtain n third subgraphs (including numbers 21 to 2n). For the first subgraph 3, the first subgraph 3 is adjusted by using n first policies, to obtain n third subgraphs (including numbers 31 to 3n). n is a positive integer greater than 1.

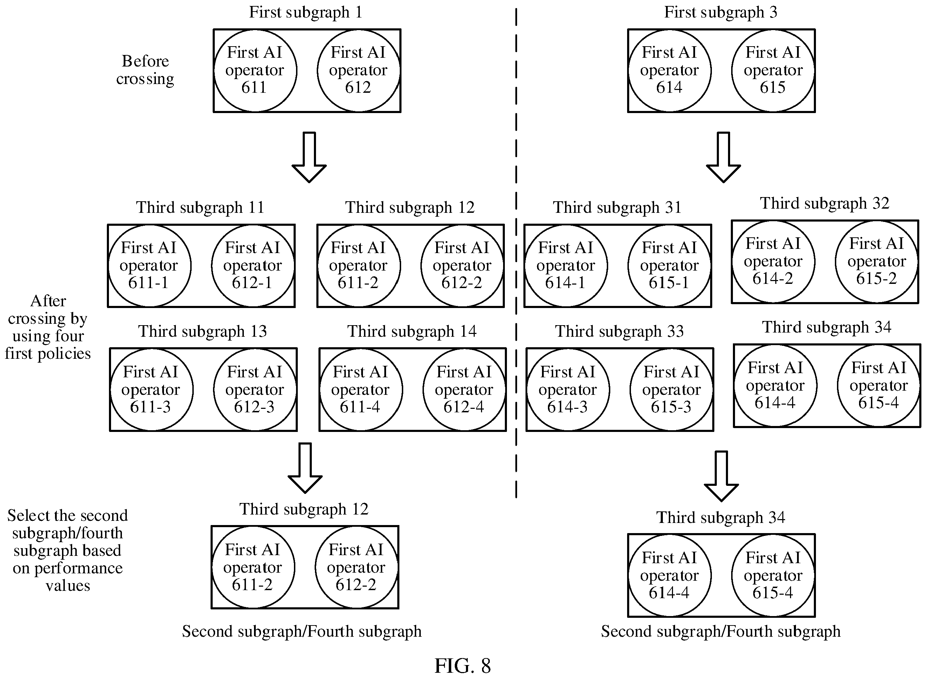

For example, as shown in FIG. 8, the first subgraph 1 is mutated by using four first policies, to obtain third subgraphs 11, 12, 13, and 14. The first subgraph 3 is mutated by using four first policies, to obtain third subgraphs 31, 32, 33, and 34.

Step 2: Select a fourth subgraph in the plurality of third subgraphs based on performance values of the plurality of third subgraphs.

After the plurality of third subgraphs are obtained by adjusting the first subgraph by using the plurality of first policies, the plurality of third subgraphs are run to obtain a plurality of performance values, and a subgraph whose performance value is greater than or equal to a second preset threshold in the plurality of third subgraphs is determined as the fourth subgraph.

In embodiments of this application, running the plurality of third subgraphs may be compiling and running on a board, or may be simulation running. This is not specifically limited herein. Certainly, a preferred solution is compiling and running on a board. In this way, the obtained performance values of the third subgraphs are more accurate, so that a more optimized second subgraph or fourth subgraph can be selected. Certainly, operator optimization may alternatively be performed on the third subgraphs before compiling and running on a board. The operator optimization may be performed by using a genetic algorithm, reinforcement learning, and the like. The genetic algorithm is used for cube operators, and the reinforcement learning is used for operators such as elewise, broadcast, and reduce. Algorithms of different operators in an NPU operator list for optimization may be different. This is not specifically limited herein.

In embodiments of this application, there may be one or more fourth subgraphs. In other words, a subgraph with an optimal performance value in the plurality of third subgraphs may be selected as the fourth subgraph or the second subgraph. Alternatively, a subgraph whose performance value is greater than or equal to the second preset threshold in the plurality of third subgraphs may be selected as the fourth subgraph or the second subgraph, which is equivalent to selecting TOP K. It may be understood that the second preset threshold may be set based on an actual requirement. This is not specifically limited herein.

In embodiments of this application, the performance value may be duration, precision, accuracy, or the like, that is, duration, precision, accuracy, or the like of calculation (for example, a matrix operation or a vector operation) of some data by the third subgraph. This is not specifically limited herein. The duration may be measured in milliseconds, microseconds, femtoseconds, or the like. This is not limited herein.

Optionally, after the fourth subgraph in the plurality of third subgraphs is selected based on the performance values of the plurality of third subgraphs, the fourth subgraph may be directly used as the optimized second subgraph. Alternatively, it may be understood that one iteration is performed on the first subgraph to obtain the second subgraph. Certainly, a plurality of iterations may alternatively be performed on the first subgraph to obtain the second subgraph.

For example, FIG. 7 is continued. After the third subgraphs 11 to 1n are run, it is determined that a performance value of the third subgraph 1X in the third subgraphs 11 to 1n is greater than or equal to the second preset threshold. Then, the third subgraph 1X is used as the second subgraph or the fourth subgraph. X is a positive integer, and $1 < X <$

n. After the third subgraphs 21 to 2n are run, it is determined that a performance value of the third subgraph 2X in the third subgraphs 21 to 2n is greater than or equal to the second preset threshold. Then, the third subgraph 2X is used as the second subgraph or the fourth subgraph. After the third subgraphs 31 to 3n are run, it is determined that a performance value of the third subgraph 3X in the third subgraphs 31 to 3n is greater than or equal to the second preset threshold. Then, the third subgraph 3X is used as the second subgraph or the fourth subgraph.

For example, as shown in FIG. 8, the third subgraph 12 is determined, from the third subgraphs 11, 12, 13, and 14, as the second subgraph or the fourth subgraph based on the performance values. The third subgraph 34 is determined, from the third subgraphs 31, 32, 33, and 34, as the second subgraph or the fourth sub graph based on the performance values.

Step 3: Adjust the fourth subgraph by using a plurality of second policies, to obtain a plurality of fifth subgraphs. This step is optional.

In this embodiment of this application, in an iteration process of the first subgraph, one policy may correspond to one subgraph (which may also be referred to as a policy subgraph). In other words, the second policy may be a policy obtained by optimizing the first policy, or the second policy may be a new policy. This is not specifically limited herein.

Optionally, after the fourth subgraph in the plurality of third subgraphs is selected based on the performance values of the plurality of third subgraphs, the fourth subgraph may be adjusted by using the plurality of second policies, to obtain the plurality of fifth subgraphs.

The step 3 is similar to the step 1, and details are not described herein again.

Step 4: Select, from the plurality of fifth subgraphs, a subgraph whose performance value satisfies a preset condition as an optimized second subgraph. This step is optional.

In this embodiment of this application, a subgraph that satisfies the preset condition may be understood as a subgraph whose performance value is greater than or equal to the second preset threshold in the fifth subgraphs.

The step 4 is similar to the step 2, and details are not described herein again.

Optionally, the step 1 and step 2 may be considered as one iteration. In actual application, to achieve a better subgraph optimization effect, a plurality of iterations generally need to be performed, that is, the step 3 and step 4 are further included. In other words, a subgraph obtained by repeatedly performing the step 1 and step 2 for a plurality of times until a quantity of times of repetition is greater than or equal to the first preset threshold may be used as the second subgraph, or a subgraph obtained by repeatedly performing the step 1 to step 4 for a plurality of times until a quantity of times of repetition is greater than or equal to the first preset threshold may be used as the second subgraph. This is not specifically limited herein.

Optionally, in an iteration process, a workflow may be recorded. In other words, a last optimization location is recorded by recording the workflow, and the optimization can be continued from the location next time. For example, 20 iterations need to be performed on the first subgraph. However, when the optimization is performed to the tenth iteration and spends 10 hours, the device is abnormal. In this case, the optimization of the model next time may be directly performed starting from the tenth iteration instead of starting from the first iteration again. In this way, discrete optimization is supported during optimization. In a restart after interruption, the corresponding workflow can be read, and a location of last optimization can be returned to continue optimization, thereby improving optimization efficiency and optimization experience.

For example, an input of a first iteration is 32 and may be changed to 64 in a second iteration. Performance values obtained after the subgraph is run on the board are viewed. If the performance of 64 is better than the performance of 32, optimization may be performed in a manner of addition (for example, 128). If the performance of 64 is lower than the performance of 32, optimization may be performed in a manner of reduction (for example, 16).

In the step 504, a second model is obtained based on the at least one second subgraph.

After the at least one second subgraph is obtained, the second model may be obtained based on the at least one second subgraph. Specifically, the first subgraph may be replaced with the optimized second subgraph, to obtain the optimized second model. Alternatively, the optimized second subgraph and the second AI operator may be spliced to generate the second model. This is not specifically limited herein.

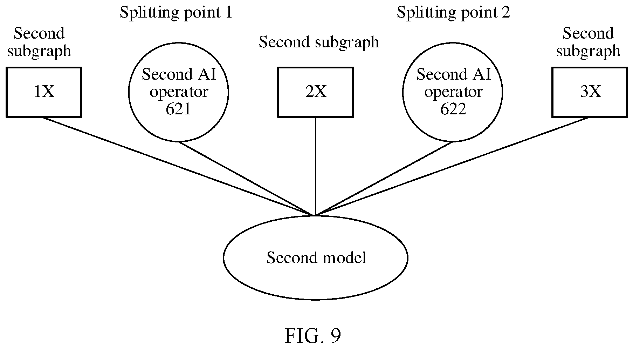

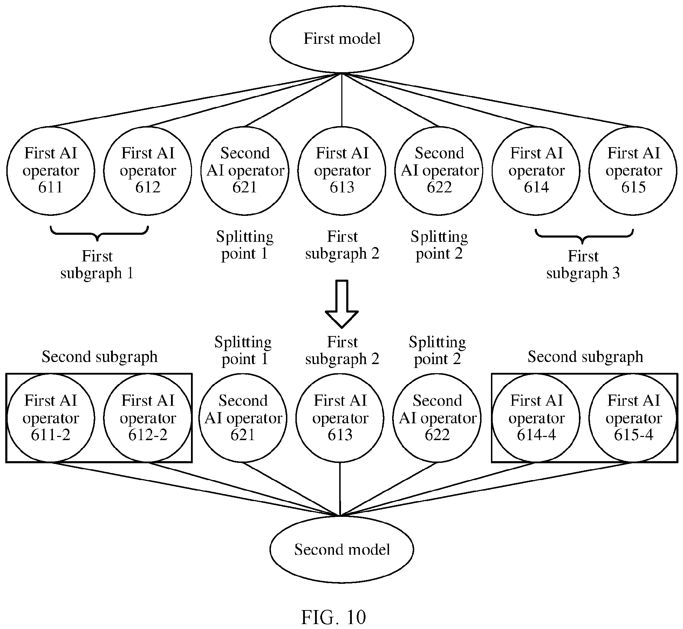

For example, the example in FIG. 7 is continued. Refer to FIG. 9. It is assumed that one iteration is performed, the first subgraph 1 is replaced with the optimized second subgraph 1X, the first subgraph 2 is replaced with the optimized second subgraph 2X, the first subgraph 3 is replaced with the optimized second subgraph 3X, and these optimized second subgraphs are merged with a splitting point 1 and a splitting point 2 to obtain the optimized second model. Certainly, some first subgraphs may alternatively be optimized. As shown in FIG. 10, the first subgraph 1 is not optimized, the first subgraphs are replaced with the optimized second subgraphs, and the optimized second subgraphs are merged with a splitting point 1 and a splitting point 2 to obtain the optimized second model.

In the step 505, a first performance value of the first model and a second performance value of the second model are obtained. This step is optional.

After the first model is obtained, the first model may be run to obtain the first performance value of the first model. After the second model is obtained, the second model may be run to obtain the second performance value of the second model. For related description of the performance value, refer to the description of the performance value of the subgraph. Details are not described herein again.

In the step 506, prompt information is output if a difference between the second performance value and the first performance value exceeds a third preset threshold. This step is optional.

After the first performance value and the second performance value are obtained, if the difference between the second performance value and the first performance value exceeds the third preset threshold, the prompt information is output. The prompt information indicates that optimization of the first model succeeds. In other words, performance of the second model obtained after the optimization is compared with performance of the first model. If the performance of the second model is higher than the performance of the first model by a specific value, it indicates that the optimization succeeds.

Optionally, if the difference between the second performance value and the first performance value is less than the third preset threshold, information of optimization failure may be output.

In embodiments of this application, the third preset threshold may be set based on an actual requirement. This is not specifically limited herein. If the performance value is duration, the third preset threshold is duration. If the performance value is accuracy, the third preset threshold is a percentage, a decimal, or the like. That is, the third preset threshold is associated with a unit and/or an order of magnitude of the performance value.

Optionally, the prompt information may be displayed to a user in a form of a message or an email. This is not specifically limited herein.

In a possible implementation, the model processing method in embodiments of this application includes the steps 501 to 504. In another possible implementation, the model processing method in embodiments of this application includes the steps 501 to 505. In another possible implementation, the model processing method in embodiments of this application includes the steps 501 to 506.

Optionally, the optimization apparatus may be disposed in a cloud, and may be provided as a time-based pricing cloud service for a tenant. The tenant rents the optimization apparatus to complete automatic model optimization.

In embodiments of this application, in an aspect, the first model is split to obtain the at least one first subgraph, the optimization operation is performed on the at least one first subgraph based on the genetic algorithm, to obtain the at least one optimized second subgraph, and the second model is obtained based on the at least one second subgraph. In this way, manual operations are reduced during optimization, and a need for users to master professional performance optimization skills is lowered. In another aspect, the subgraph obtained through the optimization operation is run, and the second subgraph is selected based on the performance value after the running. That is, the second subgraph with better performance can be automatically selected through actual running on board of the subgraph, thereby reducing an error (such as unconsidered runtime hardware limitations and operator implementation quality) existing in theoretical estimation in the conventional technology. In still another aspect, discrete optimization may be supported in a manner of recording a workflow and reading a workflow. In a restart after interruption, a location of last optimization can be returned based on the workflow to continue optimization. In this case, optimization duration is long. The support of discrete optimization can improve optimization efficiency and optimization experience.

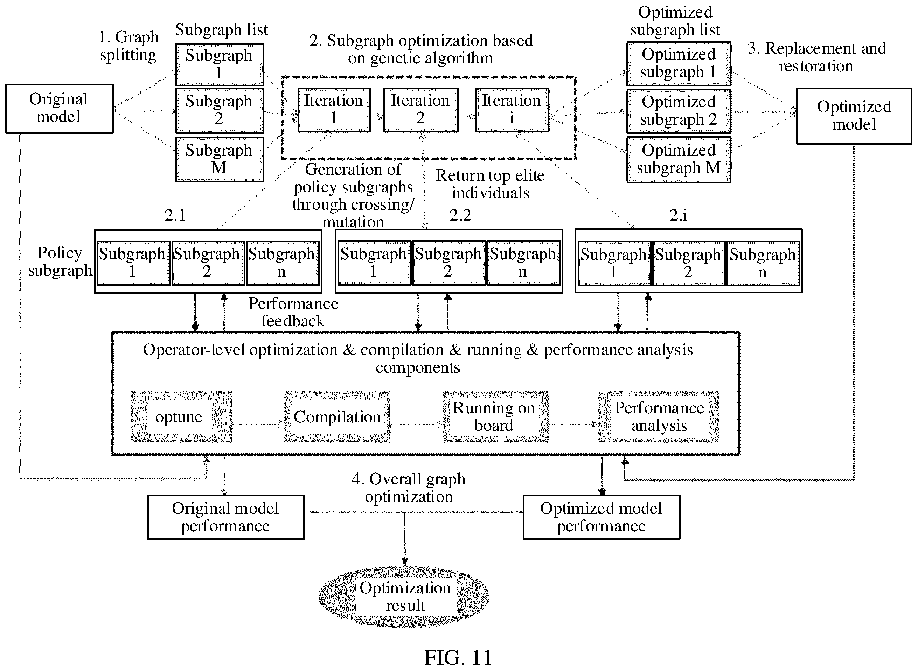

In addition, refer to FIG. 11. This application provides another schematic flowchart of a model processing method, including steps 1 to 5.

1. A user transfers a third-party model to an automatic optimization apparatus. A master of the apparatus calls a model compilation interface to compile and split the original model, to obtain a baseline model and several subgraph models. A workflow (workflow) is recorded.

2. In the apparatus, each subgraph is optimized based on a genetic algorithm, and the workflow is recorded in each iteration.

    2.1. An iteration policy is generated based on an initial population. The graph is modified based on each policy, to generate a policy subgraph. All policy subgraphs are compiled and executed on a board to obtain performance data of the policy subgraphs.

    2.2. The top K policy is retained as a population of a next iteration. Crossing and mutation are performed based on the population to generate a policy of the next iteration. The graph is modified based on each policy, to generate a policy subgraph.

    2.3. Operator optimization is performed on all policy subgraphs before compiling and executing on the board, to obtain performance data of the policy subgraphs. The policies with good performance are retained, and the policies with poor performance are discarded.

    2.4. The steps 2.2 and 2.3 are repeated for several iterations (or until a termination condition is satisfied) to obtain an optimal policy for each subgraph.

3. All subgraphs are replaced and restored to obtain an optimized model, and the workflow is recorded.

4. The optimized model is compared with the original model in performance. If the performance of the optimized model is higher than the performance of the original model by a specific threshold, it indicates that the automatic optimization succeeds. If the performance of the optimized model is not higher than the performance of the original model by the specific threshold, it indicates that there is no more optimization space and the optimization fails. The workflow is recorded.

5. The optimization supports reading the workflow, to interrupt and restore optimization at any stage, and end a current optimization task in real time to provide an optimal result at this stage.

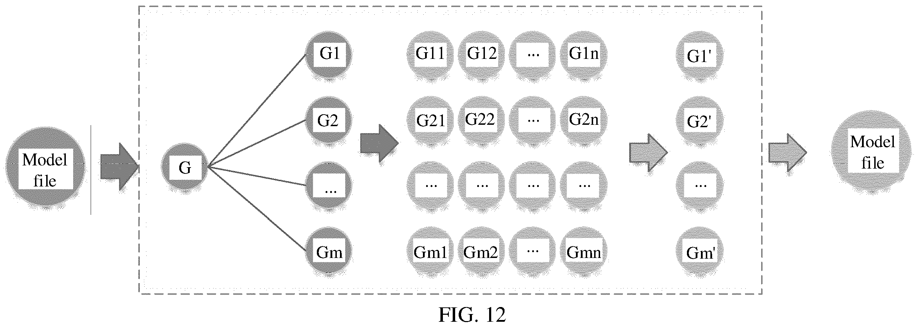

For example, for a subgraph optimization process corresponding to FIG. 11, refer to FIG. 12.

In this embodiment, manual optimization based on personal experience is improved to automatic optimization based on tools. A plurality of rounds of iteration, crossing, and compilation are performed on subgraphs of an optimization model based on a genetic algorithm to generate different policies. Actual performance data is obtained by running policy subgraphs on a board. Therefore, fully automatic optimization can be implemented. In this way, an optimization threshold is lower, and optimization is not accompanied by performance degradation. The support of discrete optimization and conditional optimization interruption makes optimization more robust and provides better user experience.

In an aspect, performance data is optimized and fed back based on a real hardware environment for automatic optimization. In this way, fully automatic optimization is implemented, with a low threshold and simple optimization. The performance data is obtained based on the real hardware environment during the optimization, so that an optimization result is reliable, and there is no performance degradation.

In another aspect, optimization is performed with a policy based on a genetic algorithm. An optimization target can be customized. Based on the genetic algorithm, elite individuals of each generation are selected for optimization in a next generation. In this way, optimization convergence is fast and an optimization effect is good.

In still another aspect, discrete optimization is supported during optimization. In a restart after interruption, a location of last optimization can be returned based on a workflow recorded at each stage to continue optimization. In this case, optimization duration is long. The support of discrete optimization can improve optimization efficiency and optimization experience.

In yet still another aspect, an optimization task can be forcibly exited during the optimization based on conditions, and an optimal result in the current optimization period can be obtained. If a user sets an optimization time, when an optimization task is not finished but the time is about to be reached, a suboptimal solution can also be obtained, instead of nothing.

Corresponding to the method provided in the foregoing method embodiments, embodiments of this application further provide a corresponding apparatus, including corresponding modules configured to execute the foregoing embodiments. The modules may be software, hardware, or a combination of software and hardware.

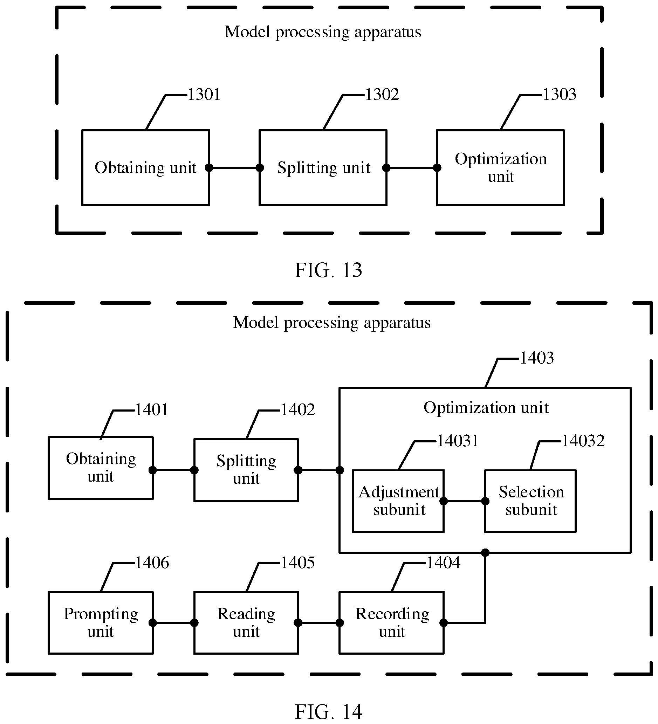

FIG. 13 is an embodiment of a model processing apparatus in embodiments of this application. The model processing apparatus includes: an obtaining unit 1301, a splitting unit 1302, and an optimization unit 1303.

The obtaining unit 1301 is configured to obtain a first model.

The splitting unit 1302 is configured to split the first model to obtain at least one first subgraph.

The optimization unit 1303 is configured to perform an optimization operation on the at least one first subgraph based on a genetic algorithm, to obtain at least one optimized second subgraph, where the at least one first subgraph is in a one-to-one correspondence with the at least one second subgraph.

The obtaining unit 1301 is further configured to obtain a second model based on the at least one second subgraph.

In this embodiment, operations performed by the units in the model processing apparatus are similar to those described in the embodiments shown in FIG. 5 to FIG. 12, and details are not described herein again.

In this embodiment, the splitting unit 1302 splits the first model to obtain the at least one first subgraph, the optimization unit 1303 performs the optimization operation on the at least one first subgraph based on the genetic algorithm, to obtain the at least one optimized second subgraph, and the obtaining unit 1301 obtains the second model based on the at least one second subgraph. In this way, manual operations are reduced during optimization, and a need for users to master professional performance optimization skills is lowered.

Refer to FIG. 14. Another embodiment of a model processing apparatus in embodiments of this application includes: an obtaining unit 1401, a splitting unit 1402, and an optimization unit 1403.

The obtaining unit 1401 is configured to obtain a first model.

The splitting unit 1402 is configured to split the first model to obtain at least one first subgraph.

The optimization unit 1403 is configured to perform an optimization operation on the at least one first subgraph based on a genetic algorithm, to obtain at least one optimized second subgraph, where the at least one first subgraph is in a one-to-one correspondence with the at least one second subgraph.

The obtaining unit 1401 is further configured to obtain a second model based on the at least one second subgraph.

The model processing apparatus in this embodiment further includes: a recording unit 1404, a reading unit 1405, and a prompting unit 1406.

The recording unit 1404 is configured to record a first workflow when the at least one first subgraph is obtained by splitting the first model. The recording unit 1404 is further configured to record a second workflow when the at least one optimized second subgraph is obtained by performing the optimization operation on the at least one first subgraph based on the genetic algorithm. The recording unit 1404 is further configured to record a third workflow when the second model is obtained based on the at least one second subgraph.

The reading unit 1405 is configured to read a workflow, where the workflow includes at least one of the first workflow, the second workflow, or the third workflow; and restore to a state that a subgraph has when the workflow is recorded, where the subgraph includes at least one of the first subgraph, the second subgraph, the third subgraph, the fourth subgraph, or the fifth subgraph.

The prompting unit 1406 is configured to output prompt information if a difference between the second performance value and the first performance value exceeds a third preset threshold, where the prompt information indicates that optimization of the first model succeeds.

Optionally, the optimization unit 1403 includes: an adjustment subunit 14031 and a selection subunit 14032.

The adjustment subunit 14031 is configured to adjust the first subgraph by using a plurality of first policies, to obtain a plurality of third subgraphs.

The selection subunit 14032 is configured to select a fourth subgraph in the plurality of third subgraphs based on performance values of the plurality of third subgraphs.

The adjustment subunit 14031 is further configured to adjust the fourth subgraph by using a plurality of second policies, to obtain a plurality of fifth subgraphs.

The selection subunit 14032 is further configured to select, from the plurality of fifth subgraphs, a subgraph whose performance value satisfies a preset condition as an optimized second subgraph.

Optionally, the adjustment subunit 14031 repeatedly performs steps of adjustment, and the selection subunit 14032 repeatedly performs steps of selection, until a quantity of times of repetition is greater than or equal to a first preset threshold.

Optionally, the selection subunit 14032 is specifically configured to run the plurality of third subgraphs to obtain a plurality of performance values; and the selection subunit 14032 is specifically configured to determine a subgraph whose performance value is greater than or equal to a second preset threshold in the plurality of third subgraphs as the fourth subgraph.

Optionally, the first model includes a first artificial intelligence AI operator and a second AI operator; and the splitting unit 1402 is specifically configured to split the first AI operator by using the second AI operator as a splitting point, to obtain the at least one first subgraph.

Optionally, the obtaining unit 1401 is specifically configured to merge the at least one second subgraph to obtain the second model.

Optionally, the obtaining unit 1401 is further configured to obtain a first performance value of the first model and a second performance value of the second model.

In this embodiment, operations performed by the units in the model processing apparatus are similar to those described in the embodiments shown in FIG. 5 to FIG. 12, and details are not described herein again.

In this embodiment, in an aspect, the optimization unit 1403 performs the optimization operation on the at least one first subgraph based on the genetic algorithm, to obtain the at least one optimized second subgraph, so that manual operations are reduced during optimization, and a need for users to master professional performance optimization skills is lowered. In another aspect, the subgraph obtained through the optimization operation is run, and the second subgraph is selected based on the performance value after the running. That is, the second subgraph with better performance can be automatically selected through actual running on board of the subgraph, thereby reducing an error (such as unconsidered runtime hardware limitations and operator implementation quality) existing in theoretical estimation in the conventional technology.

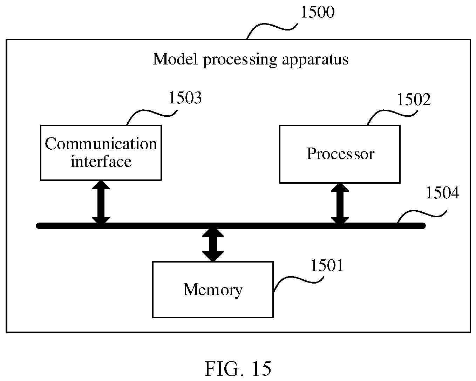

FIG. 15 is a schematic diagram of a hardware structure of a model processing apparatus according to an embodiment of this application. As shown in FIG. 15, a model processing apparatus 1500 (the apparatus 1500 may be specifically a computer device) includes a memory 1501, a processor 1502, a communication interface 1503, and a bus 1504. The memory 1501, the processor 1502, and the communication interface 1503 implement mutual communication connections by the bus 1504.

The memory 1501 may be a read only memory (read only memory, ROM), a static storage device, a dynamic storage device, or a random access memory (random access memory, RAM). The memory 1501 may store a program. When the program stored in the memory 1501 is executed by the processor 1502, the processor 1502 and the communication interface 1503 are configured to perform the steps of the model processing method in embodiments of this application.

The processor 1502 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement a function that needs to be performed by a unit in the model processing apparatus in embodiments of this application, or to perform the model processing method in the method embodiment of this application.

Alternatively, the processor 1502 may be an integrated circuit chip, and has a signal processing capability. In an implementation process, the steps of the model processing method in this application may be completed by using an integrated logic circuit of hardware in the processor 1502 or instructions in a form of software. The processor 1502 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component, to implement or perform the methods, steps, and logical block diagrams disclosed in embodiments of this application. The general-purpose processor may be a microprocessor, or the processor may be any conventional processor. The steps of the method disclosed in embodiments of this application may be directly performed and completed by a hardware decoding processor, or may be performed and completed by a combination of hardware and software modules in the decoding processor. The software module may be located in a storage medium mature in this field, such as a random access memory, a flash memory, a read only memory, a programmable read only memory, an electrically erasable programmable memory, or a register. The storage medium is located in the memory 1501. The processor 1502 reads information in the memory 1501, and completes, with reference to hardware of the processor 1502, functions that need to be performed by the units included in the model processing apparatus in embodiments of this application, or performs the model processing method in the method embodiments of this application.

The communication interface 1503 uses a transceiver apparatus such as but not limited to a transceiver, to implement communication between the apparatus 1500 and another device or communication network. For example, training data (for example, a training image described in embodiments of this application) may be obtained through the communication interface 1503.

The bus 1504 may be included in a channel for information transmission among various components (such as the memory 1501, the processor 1502, and the communication interface 1503) of the apparatus 1500.

It should be noted that although only a memory, a processor, and a communication interface are shown in the apparatus 1500 shown in FIG. 15, in a specific implementation process, a person skilled in the art should understand that the apparatus 1500 further includes other components required for normal running. In addition, based on a specific requirement, a person skilled in the art should understand that the apparatus 1500 may further include a hardware component that implements another additional function. In addition, a person skilled in the art should understand that the apparatus 1500 may include only components necessary for implementing embodiments of this application, instead of including all the components shown in FIG. 15.

In the several embodiments provided in this application, it should be understood that the disclosed system, apparatus, and method can be implemented in other manners. For example, the described apparatus embodiments are merely examples. For example, division of the units is merely logical function division and may be other division during actual implementation. For example, a plurality of units or components may be combined or integrated into another system, or some features may be omitted or not be performed. In addition, the displayed or discussed mutual couplings or direct couplings or communication connections may be implemented through some interfaces, and the indirect couplings or communication connections of the apparatuses or units may be implemented in electrical, mechanical, or other forms.

The units described as separate parts may or may not be physically separate, and the parts displayed as the units may or may not be physical units, that is, may be located in one place, or may be distributed on a plurality of network units. Some or all of the units may be selected based on actual requirements to achieve the objectives of the solutions in embodiments.

In addition, the functional units in embodiments of this application may be integrated into one processing unit, or each of the units may exist alone physically, or two or more units are integrated into one unit. The foregoing integrated unit may be implemented in a form of hardware, or may be implemented in a form of a software functional unit.

If the integrated unit is implemented in a form of a software functional unit and is sold or used as an independent product, the integrated unit may be stored in a computer-readable storage medium. Based on this understanding, the technical solutions of this application essentially, or a part that contributes to the conventional technology, or all or a part of the technical solutions may be embodied in a form of a software product. The computer software product is stored in a storage medium, and includes several instructions used to enable a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. A model processing method, comprising:

   obtaining a first model;
   splitting the first model to obtain at least one first subgraph;
   performing an optimization operation on the at least one first subgraph based on a genetic algorithm, to obtain at least one optimized second subgraph, wherein the at least one first subgraph is in a one-to-one correspondence with the at least one second subgraph; and
   obtaining a second model based on the at least one second subgraph.

2. The method according to claim 1, wherein the performing an optimization operation on each first subgraph based on a genetic algorithm comprises:

   step 1: adjusting the first subgraph by using a plurality of first policies, to obtain a plurality of third subgraphs;
   step 2: selecting a fourth subgraph in the plurality of third subgraphs based on performance values of the plurality of third subgraphs;
   step 3: adjusting the fourth subgraph by using a plurality of second policies, to obtain a plurality of fifth subgraphs; and
   step 4: selecting, from the plurality of fifth subgraphs, a subgraph whose performance value satisfies a preset condition as an optimized second subgraph.

3. The method according to claim 2, wherein the method further comprises:
   repeatedly performing the step 1, the step 2, the step 3, and the step 4 until a quantity of times of repetition is greater than or equal to a first preset threshold.

4. The method according to claim 2 or 3, wherein the selecting a fourth subgraph in the plurality of third subgraphs based on performance values of the plurality of third subgraphs comprises:

   running the plurality of third subgraphs to obtain a plurality of performance values; and
   determining a subgraph whose performance value is greater than or equal to a second preset threshold in the plurality of third subgraphs as the fourth subgraph.

5. The method according to any one of claims 1 to 4, wherein the first model comprises a first artificial intelligence AI operator and a second AI operator; and
   the splitting the first model to obtain at least one first subgraph comprises:
   splitting the first AI operator by using the second AI operator as a splitting point, to obtain the at least one first subgraph.

6. The method according to any one of claims 1 to 5, wherein the obtaining a second model based on the at least one second subgraph comprises:
   merging the at least one second subgraph to obtain the second model.

7. The method according to any one of claims 1 to 6, wherein the method further comprises:

   recording a first workflow when the at least one first subgraph is obtained by splitting the first model;
   recording a second workflow when the at least one optimized second subgraph is obtained by performing the optimization operation on the at least one first subgraph based on the genetic algorithm; and
   recording a third workflow when the second model is obtained based on the at least one second subgraph.

8. The method according to claim 7, wherein the method further comprises:

   reading a workflow, wherein the workflow comprises at least one of the first workflow, the second workflow, or the third workflow; and
   restoring to a state that a subgraph has when the workflow is recorded, wherein the subgraph comprises at least one of the first subgraph, the second subgraph, the third subgraph, the fourth subgraph, or the fifth subgraph.

9. The method according to any one of claims 1 to 8, wherein the method further comprises:
   obtaining a first performance value of the first model and a second performance value of the second model.

10. The method according to claim 9, wherein the method further comprises:
outputting prompt information if a difference between the second performance value and the first performance value exceeds a third preset threshold, wherein the prompt information indicates that optimization of the first model succeeds.

11. A model processing apparatus, comprising:

an obtaining unit, configured to obtain a first model;
a splitting unit, configured to split the first model to obtain at least one first subgraph; and
an optimization unit, configured to perform an optimization operation on the at least one first subgraph based on a genetic algorithm, to obtain at least one optimized second subgraph, wherein the at least one first subgraph is in a one-to-one correspondence with the at least one second subgraph; and
the obtaining unit is further configured to obtain a second model based on the at least one second subgraph.

12. The apparatus according to claim 11, wherein the optimization unit comprises:

an adjustment subunit, configured to adjust the first subgraph by using a plurality of first policies, to obtain a plurality of third subgraphs; and
a selection subunit, configured to select a fourth subgraph in the plurality of third subgraphs based on performance values of the plurality of third subgraphs, wherein
the adjustment subunit is further configured to adjust the fourth subgraph by using a plurality of second policies, to obtain a plurality of fifth subgraphs; and
the selection subunit is further configured to select, from the plurality of fifth subgraphs, a subgraph whose performance value satisfies a preset condition as an optimized second subgraph.

13. The apparatus according to claim 12, wherein the adjustment subunit repeatedly performs steps of adjustment, and the selection subunit repeatedly performs steps of selection, until a quantity of times of repetition is greater than or equal to a first preset threshold.

14. The apparatus according to claim 12 or 13, wherein the selection subunit is specifically configured to run the plurality of third subgraphs to obtain a plurality of performance values; and
the selection subunit is specifically configured to determine a subgraph whose performance value is greater than or equal to a second preset threshold in the plurality of third subgraphs as the fourth subgraph.

15. The apparatus according to any one of claims 11 to 14, wherein the first model comprises a first artificial intelligence AI operator and a second AI operator; and
the splitting unit is specifically configured to split the first AI operator by using the second AI operator as a splitting point, to obtain the at least one first subgraph.

16. The apparatus according to any one of claims 11 to 15, wherein the obtaining unit is specifically configured to merge the at least one second subgraph to obtain the second model.

17. The apparatus according to any one of claims 11 to 16, wherein the model processing apparatus further comprises:

a recording unit, configured to record a first workflow when the at least one first subgraph is obtained by splitting the first model, wherein
the recording unit is further configured to record a second workflow when the at least one optimized second subgraph is obtained by performing the optimization operation on the at least one first subgraph based on the genetic algorithm; and
the recording unit is further configured to record a third workflow when the second model is obtained based on the at least one second subgraph.

18. The apparatus according to claim 17, wherein the model processing apparatus further comprises:

a reading unit, configured to read a workflow, wherein the workflow comprises at least one of the first workflow, the second workflow, or the third workflow; and
restore to a state that a subgraph has when the workflow is recorded, wherein the subgraph comprises at least one of the first subgraph, the second subgraph, the third subgraph, the fourth subgraph, or the fifth subgraph.

19. The apparatus according to any one of claims 11 to 18, wherein the obtaining unit is further configured to obtain a first performance value of the first model and a second performance value of the second model.

20. The apparatus according to claim 19, wherein the model processing apparatus further comprises:
    a prompting unit, configured to output prompt information if a difference between the second performance value and the first performance value exceeds a third preset threshold, wherein the prompt information indicates that optimization of the first model succeeds.

21. A model processing apparatus, comprising a processor, wherein the processor is coupled to a memory, the memory is configured to store a computer program or instructions, and the processor is configured to execute the computer program or the instructions in the memory, so that the method according to any one of claims 1 to 10 is performed.

22. A computer storage medium, wherein the computer storage medium stores instructions, and when the instructions are executed on a computer, the computer is enabled to perform the method according to any one of claims 1 to 10.

Intelligent information chain →

Intelligent products and industrial applications

| Translation/Text analysis/... | Speech/Vision/Image/... |

Data ⇔ Data processing:

| Data training/Machine learning/ Deep learning | Search/ Reasoning/ Decision-making | ... |

Infrastructure | Sensor | Smart chip | Basic platform | ...

IT value chain ↑

**FIG. 1**

FIG. 2

Neural network processing unit 300

- Instruction fetch buffer 309
- Controller 304
- Weight memory 302
- Operation circuit 303
- Accumulator 308
- Input memory 301
- Vector calculation unit 307
- Unified memory 306
- Storage unit access controller 305
- Bus interface unit 310
- Host CPU
- External memory

FIG. 3

FIG. 4

```
┌─────────────────────────────────────────────────┐
│              Obtain a first model               │ ┌── 501
└─────────────────────────────────────────────────┘
                        │
                        ▼
┌─────────────────────────────────────────────────┐
│  Split the first model to obtain at least one   │ ┌── 502
│                 first subgraph                  │
└─────────────────────────────────────────────────┘
                        │
                        ▼
┌─────────────────────────────────────────────────┐
│ Perform an optimization operation on the at     │ ┌── 503
│ least one first subgraph based on a genetic     │
│ algorithm, to obtain at least one optimized     │
│ second subgraph                                 │
└─────────────────────────────────────────────────┘
                        │
                        ▼
┌─────────────────────────────────────────────────┐
│  Obtain a second model based on the at least    │ ┌── 504
│             one second subgraph                 │
└─────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ┐
│ Obtain a first performance value of the first   │ ┌── 505
│ model and a second performance value of the     │
│ second model                                    │
└ ─ ─ ─ ─ ─ ─ ─ ─ ─ ─ ─ ─ ─ ─ ─ ─ ─ ─ ─ ─ ─ ─ ─ ┘
                        │
                        ▼
┌ ─ ─ ─ ─ ─ ─ ─ ─ ─ ─ ─ ─ ─ ─ ─ ─ ─ ─ ─ ─ ─ ─ ─ ┐
│ Output prompt information if a difference       │ ┌── 506
│ between the second performance value and the    │
│ first performance value exceeds a third preset  │
│ threshold                                       │
└ ─ ─ ─ ─ ─ ─ ─ ─ ─ ─ ─ ─ ─ ─ ─ ─ ─ ─ ─ ─ ─ ─ ─ ┘
```

FIG. 5

First model

First AI operator 611 | First AI operator 612 | Second AI operator 621 | First AI operator 613 | Second AI operator 622 | First AI operator 614 | First AI operator 615

First subgraph 1    Splitting point 1    First subgraph 2    Splitting point 2    First subgraph 3

FIG. 6

First model

First AI operator 611 | First AI operator 612 | Second AI operator 621 | First AI operator 613 | Second AI operator 622 | First AI operator 614 | First AI operator 615

First subgraph 1     Splitting point 1     First subgraph 2     Splitting point 2     First subgraph 3

| 11 | ... | 1n | | 21 | ... | 2n | | 31 | ... | 3n |

A plurality of third subgraphs     A plurality of third subgraphs     A plurality of third subgraphs

1X     2X     3X

Second subgraph/Fourth subgraph     Second subgraph/Fourth subgraph     Second subgraph/Fourth subgraph

FIG. 7

First subgraph 1

First subgraph 3

Before
crossing

First AI operator 611    First AI operator 612

First AI operator 614    First AI operator 615

After crossing by using four first policies

Third subgraph 11

First AI operator 611-1    First AI operator 612-1

Third subgraph 12

First AI operator 611-2    First AI operator 612-2

Third subgraph 31

First AI operator 614-1    First AI operator 615-1

Third subgraph 32

First AI operator 614-2    First AI operator 615-2

Third subgraph 13

First AI operator 611-3    First AI operator 612-3

Third subgraph 14

First AI operator 611-4    First AI operator 612-4

Third subgraph 33

First AI operator 614-3    First AI operator 615-3

Third subgraph 34

First AI operator 614-4    First AI operator 615-4

Select the second subgraph/fourth subgraph based on performance values

Third subgraph 12

First AI operator 611-2    First AI operator 612-2

Second subgraph/Fourth subgraph

Third subgraph 34

First AI operator 614-4    First AI operator 615-4

Second subgraph/Fourth subgraph

FIG. 8

EP 4 246 375 A1

Splitting point 1          Splitting point 2

Second                                    Second subgraph                              Second
subgraph                                                                              subgraph

| 1X |   ( Second AI operator 621 )   | 2X |   ( Second AI operator 622 )   | 3X |

Second model

FIG. 9

FIG. 10

FIG. 11

FIG. 12

Model processing apparatus

Obtaining unit —1301

Splitting unit —1302

Optimization unit —1303

FIG. 13

Model processing apparatus

Obtaining unit —1401

Splitting unit —1402

Optimization unit —1403

Adjustment subunit —14031

Selection subunit —14032

Prompting unit —1406

Reading unit —1405

Recording unit —1404

FIG. 14

1500

Model processing apparatus

1503

Communication
interface

1502

Processor

1504

Memory

1501

FIG. 15

## INTERNATIONAL SEARCH REPORT

International application No.

**PCT/CN2021/134926**

**A. CLASSIFICATION OF SUBJECT MATTER**

G06N 3/04(2006.01)i; G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, BAIDU, EPODOC, WPI, IEEE: 神经网络, 人工智能, 模型, 计算图, 拆分, 分割, 子图, 遗传算法, 寻优, 优化, 拼接, 合并, 性能, 算子, 工作流, neural, networks, artificial, intelligence, models, computational, graphs, split, division, subgraphs, genetics, algorithms, seeking, optimization, merging, performance, operator, workflow

**C. DOCUMENTS CONSIDERED TO BE RELEVANT**

| Category* | Citation of document, with indication, where appropriate, of the relevant passages | Relevant to claim No. |
|---|---|---|
| Y | JIA, Zhihao et al. "OPTIMIZING DNN COMPUTATION WITH RELAXED GRAPH SUBSTITUTIONS" *Proceedings of the 2nd SysML Conference*, 31 December 2019 (2019-12-31), pp. 1-13 | 1-22 |
| Y | CN 110766072 A (INTELLIGENCE QUBIC BEIJING TECHNOLOGY CO., LTD.) 07 February 2020 (2020-02-07) description, paragraphs [0002]-[0044] | 1-22 |
| Y | CN 109784497 A (INTELLIGENCE QUBIC BEIJING TECHNOLOGY CO., LTD.) 21 May 2019 (2019-05-21) description, paragraphs [0002]-[0035] | 1-22 |
| A | CN 110659728 A (SHANGHAI CAMBRICON INFORMATION TECHNOLOGY CO., LTD.) 07 January 2020 (2020-01-07) entire document | 1-22 |
| A | CN 111860820 A (BEIJING LYNXI TECHNOLOGY CO., LTD.) 30 October 2020 (2020-10-30) entire document | 1-22 |

☐ Further documents are listed in the continuation of Box C.    ☑ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **17 February 2022** | **28 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| | International application No. |
|---|---|
| | **PCT/CN2021/134926** |

| Patent document cited in search report | | | Publication date (day/month/year) | Patent family member(s) | | | Publication date (day/month/year) |
|---|---|---|---|---|---|---|---|
| CN | 110766072 | A | 07 February 2020 | None | | | |
| CN | 109784497 | A | 21 May 2019 | WO | 2020147450 | A1 | 23 July 2020 |
| CN | 110659728 | A | 07 January 2020 | None | | | |
| CN | 111860820 | A | 30 October 2020 | None | | | |

Form PCT/ISA/210 (patent family annex) (January 2015)